# DEMANDE DE BREVET EUROPEEN

(11) **EP 0 693 541 A1**
(43) Date de publication de la demande: **24.01.1996**
(21) Numéro de dépôt: 95401519.4
(22) Date de dépôt: 27.06.1995
(51) Int. Cl.: C09K 5/04

(54) **Mélanges non azéotropiques de difluorométhane, trifluorométhane et 1,1,1,2-tétrafluoroéthane, et leur application comme fluides frigorigènes**

(30) Priorité: 19.07.1994 FR 9408906
(71) Demandeur: ELF ATOCHEM S.A., F-92800 Puteaux (FR)
(72) Inventeur: Macaudiere, Sylvie, F-92600 Asnieres (FR)
(74) Mandataire: Leboulenger, Jean

(57) **Abrégé**

Pour remplacer le chlorodifluorométhane dans les systèmes de réfrigération ou de conditionnement d'air, l'invention propose d'utiliser comme fluide frigorigène un mélange contenant en masse environ 10 à 22 % de difluorométhane, 4 à 8 % de trifluorométhane et 72 à 82 % de 1,1,1,2-tétrafluoroéthane.

## Description

La présente invention concerne le domaine de la réfrigération et a plus particulièrement pour objet des mélanges non azéotropiques de fluides frigorigènes n'ayant pas ou peu d'action sur l'environnement, pour remplacer les chlorofluorocarbones (CFC) ou hydrochlorofluorocarbones (HCFC) dans les systèmes de réfrigération ou de conditionnement d'air (air conditionné ou pompes à chaleur).

Dans les systèmes exploités en conditionnement d'air, on opère selon un cycle thermodynamique défini généralement par une température d'évaporation comprise entre 0 et 10°C (le plus souvent 7°C), une température de condensation entre 30 et 60°C, un sous-refroidissement du liquide de l'ordre de -5°C et une surchauffe des vapeurs d'au moins 10°C.

Le fluide frigorigène couramment utilisé en conditionnement d'air est le chlorodifluorométhane (appelé HCFC-22). Or, il est maintenant établi qu'à cause de leur action sur l'ozone, les HCFC et en particulier le HCFC-22 devront à plus ou moins longue échéance être remplacés par des fluides frigorigènes ne contenant plus de chlore et de ce fait moins agressifs vis-à-vis de l'environnement.

Pour remplacer le HCFC-22 dans les installations de conditionnement d'air existantes, le substitut doit présenter des propriétés thermodynamiques, en particulier une efficacité, une capacité frigorifique et des pressions, aussi proches que possible de celles du HCFC-22.

D'autre part, pour la bonne stabilité du produit et la durabilité du matériel, il est souhaitable que la température de refoulement n'excède pas celle du HCFC-22 de plus de 5°C environ. Enfin, le substitut doit être ininflammable et le rester en cas de fuite, même dans le cas le plus défavorable.

Le difluorométhane (HFC-32), le trifluorométhane (HFC-23) et le 1,1,1,2-tétrafluoroéthane (HFC-134a) n'ont comparativement aux composés chlorés aucune action sur l'ozone.

Le HFC-32 présente l'inconvénient majeur d'être inflammable. De plus son point d'ébullition largement plus bas que celui du HCFC-22 fait qu'il n'est pas adapté au remplacement direct du HCFC-22. Il est connu par l'homme de l'art qu'un bas point d'ébullition entraîne des pressions très élevées qui rendent impossible l'emploi d'un tel fluide dans les systèmes existants pour des raisons de sécurité.

Le HFC-134a, composé ininflammable, est un bon fluide frigorigène en terme d'efficacité, mais sa trop faible capacité frigorifique rend son emploi difficile comme substitut au HCFC-22.

Les mélanges de HFC-32 et de HFC-134a conduisent à un bon compromis entre l'efficacité et la capacité frigorifique, mais ces mélanges présentent une phase vapeur inflammable et ne satisfont pas aux normes telles que la recommandation n° 2154 (annexe E) des Underwriter Laboratories (UL) qui préconisent de vérifier l'ininflammabilité du mélange à 100°C et demandent d'effectuer la fuite dans le cas le plus défavorable.

Il a maintenant été trouvé que les mélanges contenant en masse environ 10 à 22% de HFC-32, 4 à 8% de HFC-23 et 72 à 82% de HFC-134a, présentent des propriétés thermodynamiques très proches du HCFC-22 et une tension de vapeur qui n'excède pas de plus de 15% celle du HCFC-22. De plus, ces mélanges sont ininflammables à 100°C et le restent même en cas de fuite la plus sévère ( selon la recommandation n°2154 des UL Standards).

Les mélanges selon l'invention peuvent donc être utilisés dans les systèmes d'air conditionné (soit en mode refroidissement, soit en mode chauffage), notamment pour le remplacement du HCFC-22.

Parmi les mélanges selon l'invention, un mélange tout particulièrement préféré contient environ 21,5% de HFC-32, 4,5% de HFC-23 et 74% de HFC-134a.

Les exemples suivants illustrent l'invention sans la limiter.

### Exemple 1

Le domaine d'inflammabilité des mélanges d'HFC-32/HFC-23 /HFC-134a a été déterminé en recherchant le maximum de produit inflammable acceptable dans le mélange pour que ce dernier reste ininflammable.

Cette détermination a été réalisée selon la norme ASTM E681-85 sous pression atmosphérique et à deux températures (ambiante et 100°C). Le tableau 1 résume les résultats obtenus :

**Tableau 1**

| **Fluide dans HFC-32** | **Maximum de HFC-32 % masse** | |
|---|---|---|
| | T=25°C | T=100°C |
| HFC-23 | 66 | 60 |
| HFC-134a | 51,5 | 33 |

Le tableau 2 montre l'évolution des compositions phase vapeur d'un mélange contenant en masse 21,6% de HFC-32, 4,7% de HFC-23 et 73,7% de HFC-134a lors d'une fuite réalisée en phase vapeur à -33°C (cas le plus défavorable). Ces résultats montrent que ce mélange est ininflammable à 100°C et le reste même en cas de fuite la plus sévère.

**Tableau 2**

| **Perte de masse %** | **HFC-32 %masse** | **HFC-23 % masse** | **HFC-134a % masse** |
|---|---|---|---|
| 0 | 33,66 | 26,63 | 39,71 |
| 9,7 | 36,84 | 18,32 | 44,84 |
| 19,5 | 37,9 | 11,15 | 50,05 |
| 29,5 | 35,25 | 6,16 | 58,59 |
| 43,2 | 30,65 | 2,54 | 66,81 |

### Exemple 2

Cet exemple montre que la tension de vapeur des mélanges non azéotropiques de HFC-32/HFC-23/HFC-1 34a est proche de celle du HCFC-22 et ce sur une large gamme de température.

Le tableau 3 rassemble les données pour différents mélanges à 20°C et le tableau 4 rassemble les données pour un mélange contenant en masse 21,5% de HFC-32, 4,5% de HFC-23 et 74% de HFC-134a en fonction de la température.

Cette tension de vapeur ne dépasse pas de plus de 15% celle du HCFC-22, ce qui est acceptable pour un substitut.

**Tableau 3**

| **HFC-32/HFC-23/HFC-134a % masse** | **Pression bulle (bar)** | **Tension vapeur HCFC-22 (bar)** | **Ecart (%)** |
|---|---|---|---|
| 21,5/4,5/74 | 9,56 | 9,1 | 5 |
| 22/4/74 | 9,46 | 9,1 | 4 |
| 22/6/72 | 10,09 | 9,1 | 11 |
| 20/8/72 | 10,51 | 9,1 | 15 |
| 15/8/77 | 10,05 | 9,1 | 10 |
| 10/8/82 | 9,56 | 9,1 | 5 |
| 16/4/80 | 8,84 | 9,1 | -3 |
| 16/6/78 | 9,45 | 9,1 | 4 |

**Tableau 4**

| **Température °C** | **Pression bulle (bar)** | **Tension vapeur HCFC-22 (bar)** | **Ecart %** |
|---|---|---|---|
| -40 | 1,147 | 1,049 | 9 |
| -20 | 2,614 | 2,447 | 7 |
| 0 | 5,25 | 4,98 | 5 |
| 20 | 9,56 | 9,10 | 5 |
| 40 | 16,1 | 15,3 | 5 |
| 60 | 25,5 | 24,3 | 5 |

### Exemple 3

Cet exemple illustre l'utilisation des mélanges de HFC-32, HFC-23 et HFC-134a selon l'invention comme fluides frigorigènes.

Leurs performances thermodynamiques ont été comparées à celles du HCFC-22 pour un cycle thermodynamique standard défini comme suit :
- Température de condensation : + 43°C
- Température d'évaporation : + 7°C
- Température entrée compresseur : + 18°C
- Température entrée détendeur : + 38°C

Le tableau 5 résume les performances thermodynamiques observées dans ces conditions pour différents mélanges selon l'invention.

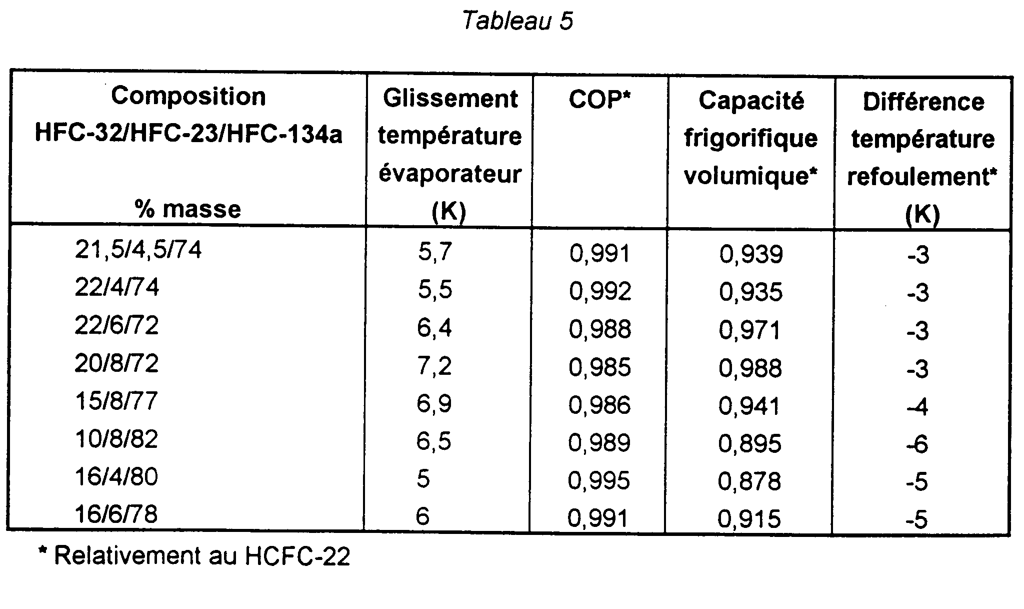

## Revendications

1. Mélange non azéotropique contenant en masse 10 à 22 % de difluorométhane, 4 à 8 % de trifluorométhane et 72 à 82 % de 1,1,1,2-tétrafluoroéthane.

2. Mélange selon la revendication 1 contenant en masse environ 21,5 % de difluorométhane, 4,5 % de trifluorométhane et 74 % de 1,1,1,2-tétrafluoroéthane.

3. Utilisation d'un mélange selon la revendication 1 ou 2 comme fluide frigorigène pour la réfrigération ou le conditionnement d'air.
